# EUROPEAN PATENT APPLICATION

(11) **EP 4 421 601 A1**
(43) Date of publication of application: **28.08.2024**
(21) Application number: 22894944.2
(22) Date of filing: 18.11.2022
(51) Int. Cl.: G06F 3/0481, G06F 3/04847, G06F 3/14

(54) **INTERACTION METHOD AND APPARATUS, AND ELECTRONIC DEVICE, STORAGE MEDIUM AND COMPUTER PROGRAM PRODUCT**

(30) Priority: 22.11.2021 CN 202111387785
(71) Applicant: Beijing Zitiao Network Technology Co., Ltd., Beijing 100190 (CN)
(72) Inventor: NIE, Gaoxin, Beijing 100086 (CN); WANG, Qi, Beijing 100086 (CN); ZHANG, Ge, Beijing 100086 (CN)
(74) Representative: Dentons UK and Middle East LLP
(86) International application number: PCT/CN2022/132805
(87) International publication number: WO 2023/088414

(57) **Abstract**

Embodiments of the present disclosure provide an interaction method and apparatus, an electronic device, a storage medium, and a computer program product. The method includes: presenting a multimedia player interface, and presenting a break reminder setting window on the multimedia player interface, where the break reminder setting window displays reminder setting options; and obtaining, in response to a setting confirmation in the break reminder setting window, a reminder triggering condition corresponding to a target reminder setting option selected in the break reminder setting window, and closing the break reminder setting window.

## Description

The present application claims priority to Chinese Patent Application No. 202111387785.9, filed with the China National Intellectual Property Administration on November 22, 2021, which is incorporated herein by reference in its entirety.

### TECHNICAL FIELD

Embodiments of the present disclosure relate to the field of computer technologies, and for example, to an interaction method and apparatus, an electronic device, a storage medium, and a computer program product.

### BACKGROUND ART

In the related art, a user may set a break reminder on a time management interface, for example, set a time point and/or a reminder interval for the break reminder on a client. However, a break reminder setting operation in the related art is so cumbersome that the break reminder cannot be set quickly.

### SUMMARY OF THE INVENTION

The embodiments of the present disclosure provide an interaction method and apparatus, an electronic device, a storage medium, and a computer program product, to simplify an operation required for setting a break reminder.

According to a first aspect, an embodiment of the present disclosure provides an interaction method, including:
presenting a multimedia player interface, and presenting a break reminder setting window on the multimedia player interface, where the break reminder setting window displays reminder setting options; and
obtaining, in response to a setting confirmation in the break reminder setting window, a reminder triggering condition corresponding to a target reminder setting option selected in the break reminder setting window, and closing the break reminder setting window.

According to a second aspect, an embodiment of the present disclosure further provides an interaction apparatus, including:
a setting window display module configured to display a multimedia player interface, and
display a break reminder setting window on the multimedia player interface, where the break reminder setting window displays reminder setting options; and
a first window closing module configured to obtain, in response to a setting confirmation in the break reminder setting window, a reminder triggering condition corresponding to a target reminder setting option selected in the break reminder setting window, and close the break reminder setting window.

According to a third aspect, an embodiment of the present disclosure further provides an electronic device, including:
at least one processor; and
a memory configured to store at least one program.

The at least one program, when executed by the at least one processor, causes the at least one processor to implement the interaction method described in the embodiments of the present disclosure.

According to a fourth aspect, an embodiment of the present disclosure further provides a computer-readable storage medium having a computer program stored thereon. The program, when executed by a processor, causes the interaction method described in the embodiments of the present disclosure to be implemented.

According to a fifth aspect, an embodiment of the present disclosure further provides a computer program product. The computer program product, when executed by a computer, causes the computer to implement the interaction method described in the embodiments of the present disclosure.

### BRIEF DESCRIPTION OF DRAWINGS

Throughout the drawings, the same or similar reference numerals denote the same or similar elements. It should be understood that the accompanying drawings are schematic and that parts and elements are not necessarily drawn to scale.
FIG. 1 is a schematic flowchart of an interaction method according to an embodiment of the present disclosure;
FIG. 2 is a schematic diagram of a break reminder setting window according to an embodiment of the present disclosure;
FIG. 3 is a schematic diagram of another break reminder setting window according to an embodiment of the present disclosure;
FIG. 4 is a schematic diagram of still another break reminder setting window according to an embodiment of the present disclosure;
FIG. 5 is a schematic diagram of a fourth break reminder setting window according to an embodiment of the present disclosure;
FIG. 6 is a schematic flowchart of another interaction method according to an embodiment of the present disclosure;
FIG. 7 is a schematic diagram of a break reminder window according to an embodiment of the present disclosure;
FIG. 8 is a schematic diagram of a running information display window according to an embodiment of the present disclosure;
FIG. 9 is a block diagram of a structure of an interaction apparatus according to an embodiment of the present disclosure; and
FIG. 10 is a schematic diagram of a structure of an electronic device according to an embodiment of the present disclosure.

### DETAILED DESCRIPTION OF THE INVENTION

The embodiments of the present disclosure are described in more detail below with reference to the accompanying drawings.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "at least one".

The names of messages or information exchanged between a plurality of apparatuses in the implementations of the present disclosure are used for illustrative purposes only, and are not used to limit the scope of these messages or information.

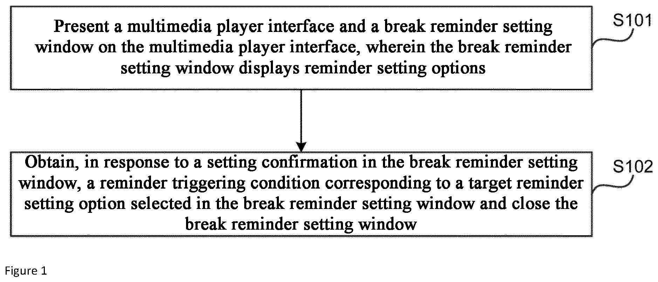

FIG. 1 is a schematic flowchart of an interaction method according to an embodiment of the present disclosure. The method may be performed by an interaction apparatus. The apparatus may be implemented by software and/or hardware, and may be configured in an electronic device, typically in a mobile phone or a tablet computer. The interaction method provided in this embodiment of the present disclosure is applied to a scenario of setting a break reminder while content presented on a multimedia player interface is being viewed. As shown in FIG. 1, the interaction method provided in this embodiment may include the following steps.

S101: Present a multimedia player interface, and display a break reminder setting window on the multimedia player interface, where the break reminder setting window displays reminder setting options.

The multimedia player interface may be a current interface on which multimedia information that a user is currently watching is presented, for example, a video playback interface or a player interface for other multimedia information that the user is currently watching. The following description is provided by using an example in which the multimedia player interface is the video playback interface, that is, the user is currently watching a video. The break reminder setting window may be a window used for the user to set a reminder triggering condition for a break reminder. The reminder setting window may display the reminder setting options, for example, display a plurality of time controls or a time slider provided with a handle and a plurality of time options.

For example, the multimedia player interface may be presented, the corresponding multimedia information may be presented on the multimedia player interface, and the break reminder setting window may be presented on the multimedia player interface. For example, the video playback interface may be presented, the video may be played on the video playback interface, a reminder setting window may be presented on the video playback interface, and reminder setting options may be presented in the reminder setting window.

In this embodiment, the break reminder setting window may be presented on the multimedia player interface on which the multimedia information that the user is currently watching is presented, and it is not the case that when it is detected that the user triggers a time management control, only a time management interface is presented, and break reminder setting content is presented on the time management interface. Therefore, presenting the break reminder setting window on the multimedia player interface enables the user to complete setting the reminder condition for the break reminder while watching the multimedia information presented on the multimedia player interface, without switching to the time management interface or entering a player interface of the time management control through a series of trigger operations and entering the time management interface by triggering the time management control for setting. This can simplify an operation required for setting the break reminder and improve user experience.

In addition, due to a deep operation entry for a time management feature and a long operation path for switching to the time management interface in the related art, many users are unaware of existence of this feature. Therefore, in this embodiment, presenting the break reminder setting window on the multimedia player interface can also enable more users to be aware of and use the time management feature as required, thereby improving utilization of the time management feature by the user, and improving user experience.

In this embodiment, the break reminder setting window may be presented when the multimedia player interface is presented, that is, on the multimedia player interface. Alternatively, the break reminder setting window may be presented on the multimedia player interface only when a current condition accords with a preset condition, for example, when the user has set no reminder triggering condition and the current condition accords with a default reminder triggering condition, to remind the user to take a break while a condition for setting a break reminder by the user is met, and avoid undue interference to the user in watching the multimedia information presented on the multimedia player interface.

Here, the default reminder triggering condition may be set by working personnel. For example, the default reminder triggering condition may be set to be that a duration of use of a client by the user (that is, a running duration of the client) reaches a running duration threshold. In this case, presenting the break reminder setting window on the multimedia player interface optionally includes: presenting the break reminder setting window in a preset presenting region of the multimedia player interface when the user has set no reminder triggering condition and a target running duration of the client reaches a target running duration threshold.

The target running duration may include a cumulative running duration and/or a continuous running duration. Accordingly, the target running duration threshold may be a preset cumulative running duration threshold and/or continuous running duration threshold. The following uses an example in which the target running duration includes the cumulative running duration and the continuous running duration and the target running duration threshold includes a first preset cumulative running duration threshold and a preset continuous running duration threshold for description. The preset presenting region may be a presenting region of the break reminder setting window, and may be set as required. For example, the preset presenting region may be set to be located at the top or the bottom of the multimedia player interface.

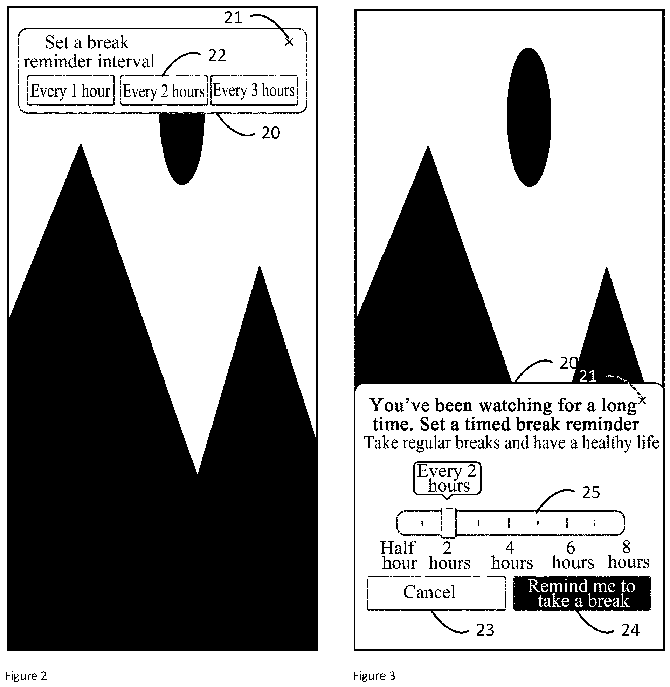

For example, after started, the client may determine whether the user has set a break reminder, for example, determine whether there is a target reminder triggering condition set by the user. When there is the target reminder triggering condition set by the user, a break reminder is given to the user based on the target reminder triggering condition; or when there is no target reminder triggering condition set by the user, a cumulative running duration of the client within a preset cumulative period (for example, a current day, a current week, or a current month) and a current continuous running duration of the client may be recorded, that is, a cumulative duration of use by the user within the preset cumulative period and a current continuous duration of use are recorded, and when the cumulative running duration reaches the first preset cumulative running duration threshold and the current continuous running duration reaches the preset continuous running duration threshold, the break reminder setting window is popped up on the multimedia player interface, as shown in FIG. 2 and FIG. 3, to remind the user to set the reminder triggering condition for the break reminder.

It should be noted that in this embodiment, that the user has set no reminder triggering condition may be that the user has not yet set any reminder triggering conditions, for example, the user has not yet set a reminder time interval nor set a sleep reminder time. Alternatively, that the user has set no reminder triggering condition may be that the user has not yet set a reminder triggering condition corresponding to a time period that a current moment is within. For example, when the current moment is within a first time period, that the user has set no reminder triggering condition may be that the user has not yet set a reminder time interval; or when the current moment is within a second time period, that the user has set no reminder triggering condition may be that the user has not yet set a sleep reminder time. If the multimedia player interface is the video playback interface, when the break reminder setting window is presented, playback of the video being currently played on the multimedia player interface may be continued or paused. This is not limited in this embodiment.

In this embodiment, the break reminder setting window may be set to be closed only when a corresponding trigger operation (for example, a window close operation and/or a setting confirm operation) of the user is received, so as to give a strong reminder to the user. Alternatively, the break reminder setting window may be set to be closed when a corresponding trigger operation of the user is received or no trigger operation of the user is received in a long time, so as to give a weak reminder to the user. In this case, optionally, the interaction method provided in this embodiment may further include: closing the break reminder setting window when no trigger operation performed in the break reminder setting window is received within a preset time length. The preset time length may be set as required, for example, may be set to a time length of 3s or 5s. The window close operation may be an operation for instructing the client to directly close the break reminder setting window, for example, an operation for triggering a close control or a cancel control in the break reminder setting window, a swipe operation in a preset direction (for example, swiping up) on the multimedia player interface, or the like.

In an exemplary implementation, the break reminder setting window presented at the top of the multimedia player interface may be set to be closed when the corresponding trigger operation of the user is received or no trigger operation of the user is received in a long time, and the break reminder setting window presented at the bottom of the multimedia player interface may be set to be closed only when the corresponding trigger operation of the user is received.

For example, as shown in FIG. 2 and FIG. 3, a break reminder setting window 20 may be presented at the top of the multimedia player interface, and the break reminder setting window 20 may be closed when it is detected that the user triggers a close control 21 in the break reminder setting window 20 or swipes in the preset direction on the multimedia player interface or triggers a time interval control 22, or when no trigger operation performed in the break reminder setting window 20 is received within the preset time length. Alternatively, the break reminder setting window 20 may be presented at the bottom of the multimedia player interface, and the break reminder setting window 20 may be closed when it is detected that the user triggers the close control 21, a cancel control 23, or a remind control 24 in the break reminder setting window.

In an implementation, presenting the break reminder setting window on the multimedia player interface includes: presenting reminder interval setting content in the break reminder setting window if the current moment is within a first preset time period; or presenting sleep reminder setting content in the break reminder setting window if the current moment is within a second preset time period.

In the above implementation, different setting content may be presented in the break reminder setting window depending on different time periods that the current moment is within, so that the user sets different reminder content.

For example, when the current moment is within the first preset time period, the reminder interval setting content may be presented. For example, different time interval controls 22 are presented (as shown in FIG. 2), so that the user may trigger a time interval control 22 to set a reminder interval to a time interval corresponding to the time interval control 22. Alternatively, a time interval slider 25 with a handle is presented (as shown in FIG. 3), so that the user may slide the handle to select a time interval as a reminder interval.

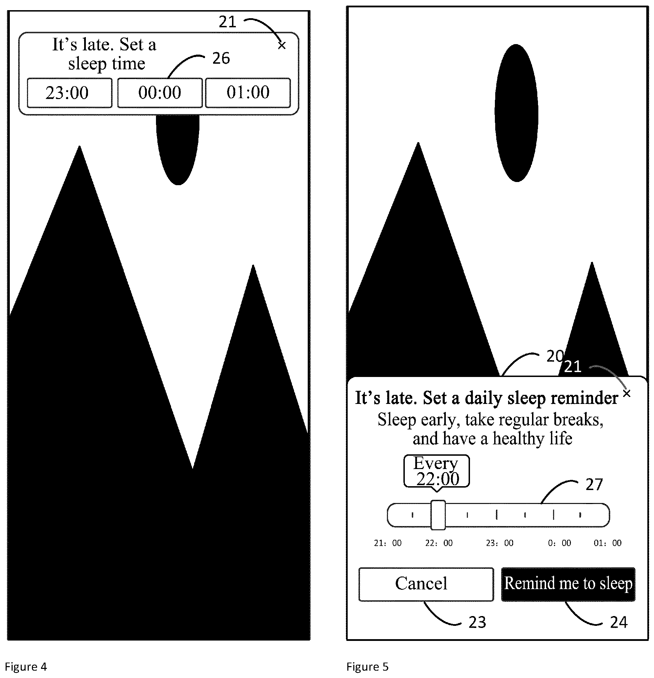

When the current moment is within the second preset time period, the sleet reminder setting content may be presented. For example, different sleep reminder time controls 26 are presented (as shown in FIG. 4), so that the user may trigger a sleep time control 26 to set a sleep reminder time to a time point corresponding to the sleep reminder time control 26. Alternatively, a sleep reminder time slider 27 with a handle is presented (as shown in FIG. 5), so that the user may slide the handle to select a time point as a sleep reminder time.

Both the first preset time period and the second preset time period may be set as required. For example, the first preset time period is set to a preset daytime period, and the second preset time period is set to a preset nighttime period. Alternatively, the first preset time period is set to a preset nighttime period, and the second time period is set to a preset daytime period. The preset daytime period and the preset nighttime period may be flexibly set. For example, the preset daytime period is set to 6: 00 to 21: 00, and the preset nighttime period is set to a time period other than the preset daytime period. When it is detected that the user taps the handle, a display size of the handle may be appropriately enlarged to prompt the user that the trigger operation of the user on the handle has worked. When the user completes sliding the handle, the handle is automatically moved to a time interval node or a time node closest to a current position of the handle, and the electronic device is controlled to vibrate to prompt the user that selection is completed.

S102: Obtain, in response to a setting confirmation in the break reminder setting window, a reminder triggering condition corresponding to a target reminder setting option selected in the break reminder setting window, and close the break reminder setting window.

The setting confirm operation may be an operation that the user confirms completion of setting, for example, an operation for triggering a time interval control 22/sleep reminder time control 26 presented in the break reminder setting window, or an operation for triggering the remind control 24 in the break reminder setting window. The target reminder setting option may be a reminder setting option selected by the user in the break reminder setting window. The target reminder triggering condition may be a reminder triggering condition set by the user, for example, the reminder interval and/or the sleep reminder time set by the user.

For example, the user may select a reminder setting option in the break reminder setting window. Accordingly, after receiving the setting confirmation in the break reminder setting window, the client may obtain the reminder triggering condition corresponding to the reminder setting option selected by the user in the break reminder setting window, use the reminder triggering condition as the target reminder setting condition, and close the break reminder setting window. Therefore, when the target reminder triggering condition is subsequently satisfied, a break reminder may be given to the user. For example, if the reminder interval set by the user is a hours, and the sleep reminder time set by the user is b o'clock, the break reminder may be set for the user every time when a continuous running duration reaches a hours, that is, a continuous duration of use by the user is a hours, and/or the user may be reminded to sleep when the current moment reaches b o'clock. A reminder manner for reminding the user may be set as required. For example, an overlay is presented over the multimedia player interface, and preset break reminder information or sleep reminder information is presented in the overlay. The overlay may stop being presented after being presented for a specified time length.

In this embodiment, the client displays the break reminder setting window on the multimedia player interface to remind the user to set the break reminder, and continues to display the multimedia player interface and display the multimedia information on the multimedia player interface during setting by the user or after completion of setting. Therefore, the user may receive a reminder for break reminder setting and complete break reminder setting in a process of browsing the multimedia information. In addition, during setting or after completion of setting, the user may continue to browse the multimedia information on the multimedia player interface. For example, the user may perform a trigger operation for switching the multimedia information to instruct the client to switch the multimedia information presented on the multimedia player interface. Accordingly, the client may switch, based on the trigger operation of the user, the multimedia information to previous multimedia information or next multimedia information for display.

Optionally, a plurality of time controls are presented in the break reminder setting window, and the target reminder setting option is a time control selected by the user. Alternatively, a time slider is presented in the break reminder setting window, the time slider is provided with a handle and a plurality of time options, and the target reminder setting option is a time option selected by the user using the handle.

The time control may be a time-related control, for example, a time interval control or a sleep reminder time control. The time option may be a time-related option, for example, a time interval option or a time point option.

For example, as shown in FIG. 2 and FIG. 4, the client may display the plurality of time interval controls 22 or sleep reminder time controls 26 in the break reminder setting window 20. Therefore, the user may trigger a time interval control 22 to set a reminder interval to a time interval corresponding to the time interval control 22, or trigger a sleep reminder time control 26 to set the sleep reminder time to a reminder time corresponding to the sleep reminder time control 26. Accordingly, when detecting that the user triggers a time interval control 22, the client may use a time interval corresponding to the time interval control 22 as a time interval for reminding the user; or when detecting that the user triggers a sleep reminder time control 26, the client may use a sleep reminder time corresponding to the sleep reminder time control 26 as a time point for reminding the user to sleep, thereby obtaining the target reminder triggering condition.

As shown in FIG. 3 and FIG. 5, the client may alternatively display the time interval slider 25 or the sleep reminder time slider 27 in the break reminder setting window 20. Therefore, the user may slide the handle on the slider to select a time interval option or a time point option, and trigger the remind control 24 in the break reminder setting window 20 after completing the selection. Accordingly, when detecting that the user triggers the remind control 24, the client may obtain a time interval or a time point corresponding to the handle on the slider as a time interval for reminding the user or a time point for reminding the user to sleep, thereby obtaining the target reminder triggering condition.

In addition, after the break reminder setting window is closed, a notification message may be presented on the multimedia player interface, to prompt the user that the user may be reminded according to the target reminder triggering condition set by the user. The notification message may stop being presented after being presented for a specific time length.

According to the interaction method provided in this embodiment, the multimedia player interface is presented, and the break reminder setting window is presented on the multimedia player interface. The break reminder setting window displays reminder setting options. The reminder triggering condition corresponding to the target reminder setting selected by the user in the break reminder setting window is obtained as the target reminder triggering condition in response to the setting confirmation in the break reminder setting window, and the break reminder setting window is closed. In this embodiment, with the above technical solution, the break reminder setting window is presented on the multimedia player interface, such that the user may complete setting the reminder triggering condition for the break reminder on the multimedia player interface, without entering the player interface of the time management control through the series of trigger operations and entering the time management interface by triggering the time management control for setting. This can simplify the operation required for setting the break reminder and improve user experience.

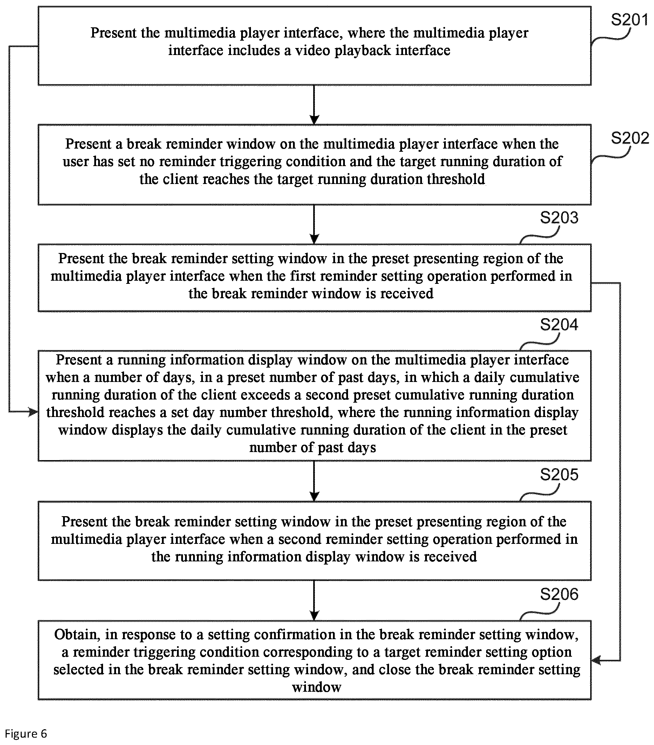

FIG. 6 is a schematic flowchart of another interaction method according to an embodiment of the present disclosure. The solution in this embodiment may be combined with at least one optional solution in the above embodiment. Optionally, the presenting the break reminder setting window in a preset presenting region of the multimedia player interface when the user has set no reminder triggering condition and a target running duration of the client reaches a target running duration threshold includes: presenting a break reminder window on the multimedia player interface when the user has set no reminder triggering condition and the target running duration of the client reaches the target running duration threshold; and presenting the break reminder setting window in the preset presenting region of the multimedia player interface when a first reminder setting operation performed in the break reminder window is received.

Optionally, the interaction method provided in this embodiment may further include: presenting a running information display window on the multimedia player interface when a number of days, in a preset number of past days, in which a daily cumulative running duration of the client exceeds a second preset cumulative running duration threshold reaches a set day number threshold, where the running information display window displays the daily cumulative running duration of the client in the preset number of past days.

Optionally, the presenting a break reminder setting window on the multimedia player interface includes: presenting the break reminder setting window in the preset presenting region of the multimedia player interface when a second reminder setting operation performed in the running information display window is received.

Accordingly, as shown in FIG. 6, the interaction method provided in this embodiment may include the following steps.

S201: Present the multimedia player interface, and perform S202 or S204, where the multimedia player interface includes a video playback interface.

S202: Present a break reminder window on the multimedia player interface when the user has set no reminder triggering condition and the target running duration of the client reaches the target running duration threshold.

In this embodiment, the user may be reminded through the break reminder window to take a break, and the user may be reminded to set a break reminder.

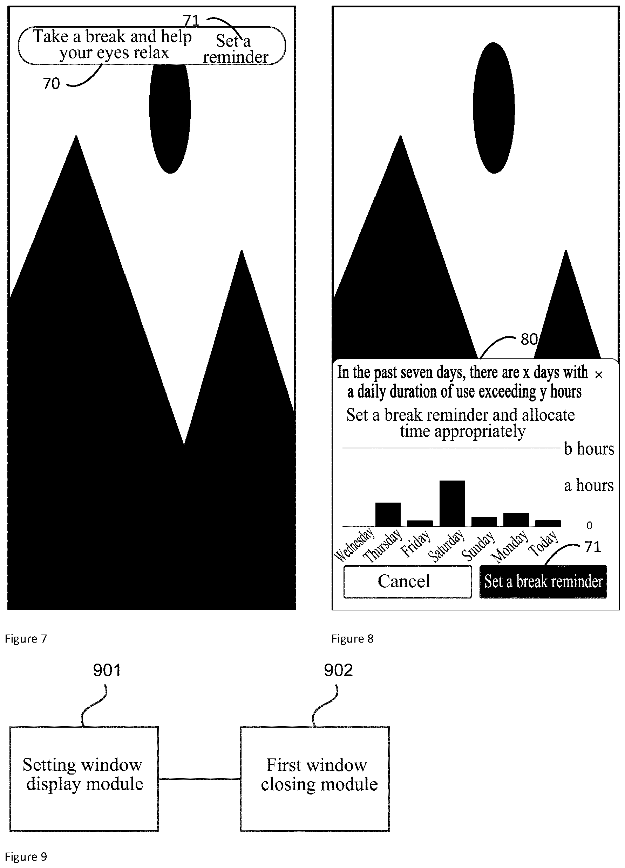

For example, after started, the client may determine whether the user has set a break reminder, for example, determine whether there is a target reminder triggering condition set by the user. When there is the target reminder triggering condition set by the user, a break reminder is given to the user based on the target reminder triggering condition; or when there is no target reminder triggering condition set by the user, statistics on the target running duration of the client may be collected, for example, statistics on a cumulative running duration of the client within a preset cumulative period (for example, a current day, a current week, or a current month) and a current continuous running duration of the client may be collected, and when the cumulative running duration reaches a first preset cumulative running duration threshold and the current continuous running duration reaches a preset continuous running duration threshold, a break reminder window 70 is presented on the multimedia player interface, as shown in FIG. 7, to remind the user to take a break.

S203: Present the break reminder setting window in the preset presenting region of the multimedia player interface when the first reminder setting operation performed in the break reminder window is received, and perform S206.

The first reminder setting operation may be a reminder setting operation performed in the break reminder window, for example, a trigger operation for triggering a reminder setting control presented in the break reminder window, and may be used to instruct the client to display the break reminder setting window.

For example, as shown in FIG. 7, the client displays the break reminder window 70 on the multimedia player interface, and display a reminder setting control 71 in the break reminder window 70. Therefore, when intended to set the break reminder, the user may trigger the reminder setting control 71 presented in the break reminder window 70. Accordingly, when detecting that the user triggers the reminder setting control 71 presented in the break reminder window 70, the client may display the break reminder setting window 20 in the preset presenting region of the multimedia player interface, display, in the break reminder setting window 20, setting content corresponding to a time period that a current moment is within, for the user to set the break reminder, and further close the break reminder window 70, as shown in FIG. 2 to FIG. 5.

S204: Present a running information display window on the multimedia player interface when a number of days, in a preset number of past days, in which a daily cumulative running duration of the client exceeds a second preset cumulative running duration threshold reaches a set day number threshold, where the running information display window displays the daily cumulative running duration of the client in the preset number of past days.

In this embodiment, when a duration of use by the user is long, if a cumulative running duration of the client in each of a plurality of days in the preset number of past days exceeds the second preset cumulative running duration threshold, the user may be reminded, so that the user allocates time appropriately.

All of the preset number of days, the second preset cumulative running duration threshold, and the set day number threshold may be set as required as long as the preset number of days is greater than or equal to the set day number threshold and the preset cumulative running duration is less than or equal to 24 hours. For example, the cumulative running duration threshold is set to 6 hours, 8 hours, or 10 hours, the preset number of days is set to 7 days, and the set day number threshold is set to 3 days. Alternatively, the preset number of days is set to 10 days, and the set day number threshold is set to 4 days. Alternatively, the preset number of days is set to 30 days, and the set day number threshold is set to 10 days.

For example, the client may collect statistics on the number of days in the preset number of past days, in which the daily cumulative running duration of the client exceeds the second preset cumulative running duration threshold, for example, may collect statistics on the daily cumulative running duration of the client, that is, collect statistics on the daily duration of use by the user. When cumulative running duration on a day exceeds the second preset cumulative running duration threshold, the day is marked as timeout. Statistics on a number of days marked as timeout in the preset number of past days is collected. When the number of days reaches the set day number threshold, a running information display window 80 is presented on the multimedia player interface, as shown in FIG. 8. In the running information display window 80, the cumulative running duration of the client in each of the preset number of past days is presented to the user, that is, a cumulative duration of use by the user per day in the preset number of past days is presented to the user, to prompt the user to allocate time appropriately.

S205: Present the break reminder setting window in the preset presenting region of the multimedia player interface when a second reminder setting operation performed in the running information display window is received.

The second reminder setting operation may be a reminder setting operation performed in the running information display window, for example, a trigger operation for triggering the reminder setting control presented in the running information display window, and may be used to instruct the client to display the break reminder setting window.

For example, as shown in FIG. 8, the client displays the running information display window 80 on the multimedia player interface, and displays the reminder setting control 71 in the running information display window 80. Therefore, when intended to set the break reminder, the user may trigger the reminder setting control 71 presented in the running information display window 80. Accordingly, when detecting that the user triggers the reminder setting control 71 presented in the running information display window 80, the client may display the break reminder setting window 20 in the preset presenting region of the multimedia player interface, display, in the break reminder setting window 20, the setting content corresponding to the time period that the current moment is within, for the user to set the break reminder, and further close the break reminder window, as shown in FIG. 2 to FIG. 5.

S206: Obtain, in response to a setting confirmation in the break reminder setting window, a reminder triggering condition corresponding to a target reminder setting option selected in the break reminder setting window, and close the break reminder setting window.

According to the interaction method provided in this embodiment, the user is reminded in different manners when a current condition accords with different conditions. Therefore, the user can be reminded to use the client appropriately on the premise that a break reminder setting requirement of the user is met, thereby improving user experience.

FIG. 9 is a block diagram of a structure of an interaction apparatus according to an embodiment of the present disclosure. The apparatus may be implemented by software and/or hardware, may be configured in an electronic device, typically in a mobile phone or a tablet computer, and may give a break reminder by performing an interaction method. As shown in FIG. 9, the interaction apparatus provided in this embodiment may include a setting window display module 901, a first window closing module 902, and a break reminder module 903.

The setting window display module 901 is configured to display a multimedia player interface, and display a break reminder setting window on the multimedia player interface. The break reminder setting window displays reminder setting options.

The first window closing module 902 is configured to obtain, in response to a setting confirmation in the break reminder setting window, a reminder triggering condition corresponding to a target reminder setting option selected in the break reminder setting window, and close the break reminder setting window.

According to the interaction apparatus provided in this embodiment, the setting window display module displays the multimedia player interface, and displays the break reminder setting window on the multimedia player interface. The break reminder setting window displays reminder setting options. The first window closing module obtains, in response to the setting confirmation in the break reminder setting window, the reminder triggering condition corresponding to the target reminder setting selected by the user in the break reminder setting window as the target reminder triggering condition, and closes the break reminder setting window. In this embodiment, with the above technical solution, the break reminder setting window is presented on the multimedia player interface, such that the user may complete setting the reminder triggering condition for a break reminder on the multimedia player interface, without entering a player interface of a time management control through a series of trigger operations and entering a time management interface by triggering the time management control for setting. This can simplify the operation required for setting the break reminder and improve user experience.

In the above solution, the setting window display module 901 may include a first display unit configured to display the break reminder setting window in a preset presenting region of the multimedia player interface when the user has set no reminder triggering condition and a target running duration of a client reaches a target running duration threshold.

In the above solution, the first display unit may include: a reminder window display subunit configured to display a break reminder window on the multimedia player interface when the user has set no reminder triggering condition and the target running duration of the client reaches the target running duration threshold; and a setting window display subunit configured to display the break reminder setting window in the preset presenting region of the multimedia player interface when a first reminder setting operation performed in the break reminder window is received.

Optionally, the interaction apparatus provided in this embodiment may further include a second window closing module configured to close the break reminder setting window when a trigger operation performed in the break reminder setting window is not received within a preset time length.

Optionally, the interaction apparatus provided in this embodiment may further include a display window display module configured to display a running information display window on the multimedia player interface when a number of days, in a preset number of past days, in which a daily cumulative running duration of the client exceeds a second preset cumulative running duration threshold reaches a set day number threshold. The running information display window displays the daily cumulative running duration of the client in the preset number of past days.

In the above solution, the setting window display module 901 may include a second display unit configured to display the break reminder setting window in the preset presenting region of the multimedia player interface when a second reminder setting operation performed in the running information display window is received.

In the above solution, the setting window display module 901 may be configured to: display reminder interval setting content in the break reminder setting window if a current moment is within a first preset time period; or display sleep reminder setting content in the break reminder setting window if the current moment is within a second preset time period.

In the above solution, a plurality of time controls may be presented in the break reminder setting window, and the target reminder setting option may be a time control selected by the user. Alternatively, a time slider may be presented in the break reminder setting window, the time slider may be provided with a handle and a plurality of time options, and the target reminder setting option may be a time option selected by the user using the handle.

The interaction apparatus provided in this embodiment of the present disclosure may perform the interaction method provided in any embodiment of the present disclosure, and has corresponding function modules for performing the interaction method. For technical details not described in detail in this embodiment, reference may be made to the interaction method provided in any embodiment of the present disclosure.

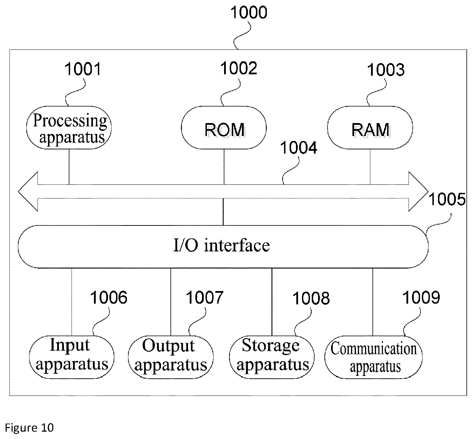

FIG. 10 is a schematic diagram of a structure of an electronic device (for example, a terminal device) 1000 suitable for implementing the embodiments of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital television (TV) and a desktop computer. The electronic device shown in FIG. 10 is merely an example, and shall not impose any limitation on the function and scope of use of the embodiments of the present disclosure.

As shown in FIG. 10, the electronic device 1000 may include a processing apparatus (e.g., a central processor, a graphics processor, etc.) 1001 that may perform a variety of appropriate actions and processing in accordance with a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 including, for example, a touch screen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a tape and a hard disk; and a communication apparatus 1009. The communication apparatus 1009 may allow the electronic device 1000 to perform wireless or wired communication with other devices to exchange data. Although FIG. 10 shows the electronic device 1000 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 1009 and installed, installed from the storage apparatus 1008, or installed from the ROM 1002. When the computer program is executed by the processing apparatus 1001, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having at least one wire, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network (LAN), a wide area network (WAN), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries at least one program, and the at least one program, when executed by the electronic device, causes the electronic device to perform the following: presenting a multimedia player interface, and presenting a break reminder setting window on the multimedia player interface, where the break reminder setting window displays reminder setting options; and obtaining, in response to a setting confirmation in the break reminder setting window, a reminder triggering condition corresponding to a target reminder setting option selected in the break reminder setting window, and closing the break reminder setting window.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to a computer of a user over any type of network, including a local area network (LAN) or a wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains at least one executable instruction for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by at least one hardware logic component. For example, without limitation, exemplary types of hardware logic components that may be used include: a field programmable gate array (FPGA), an application specific integrated circuit (ASIC), an application specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of a machine-readable storage medium may include an electrical connection based on at least one wire, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

According to at least one embodiment of the present disclosure, Example 1 provides an interaction method, including:
presenting a multimedia player interface, and presenting a break reminder setting window on the multimedia player interface, where the break reminder setting window displays reminder setting options; and
obtaining, in response to a setting confirmation in the break reminder setting window, a reminder triggering condition corresponding to a target reminder setting option selected in the break reminder setting window, and closing the break reminder setting window.

According to at least one embodiment of the present disclosure, in Example 2, according to the method in Example 1, the presenting a break reminder setting window on the multimedia player interface includes:
presenting the break reminder setting window in a preset presenting region of the multimedia player interface when the user has set no reminder triggering condition and a target running duration of a client reaches a target running duration threshold.

According to at least one embodiment of the present disclosure, in Example 3, according to the method in Example 2,
the presenting the break reminder setting window in a preset presenting region of the multimedia player interface when the user has set no reminder triggering condition and a target running duration of a client reaches a target running duration threshold includes:
presenting a break reminder window on the multimedia player interface when the user has set no reminder triggering condition and the target running duration of the client reaches the target running duration threshold; and
presenting the break reminder setting window in the preset presenting region of the multimedia player interface when a first reminder setting operation performed in the break reminder window is received.

According to at least one embodiment of the present disclosure, in Example 4, the method according to any one of Examples 1 to 3 further includes:
closing the break reminder setting window when no trigger operation performed in the break reminder setting window is received within a preset time length.

According to at least one embodiment of the present disclosure, in Example 5, the method according to any one of Examples 1 to 3 further includes:
presenting a running information display window on the multimedia player interface when a number of days, in a preset number of past days, in which a daily cumulative running duration of the client exceeds a second preset cumulative running duration threshold reaches a set day number threshold, where the running information display window displays the daily cumulative running duration of the client in the preset number of past days.

According to at least one embodiment of the present disclosure, in Example 6, according to the method in Example 5, the presenting a break reminder setting window on the multimedia player interface includes:
presenting the break reminder setting window in the preset presenting region of the multimedia player interface when a second reminder setting operation performed in the running information display window is received.

According to at least one embodiment of the present disclosure, in Example 7, according to the method in any one of Examples 1 to 3, the presenting a break reminder setting window on the multimedia player interface includes:
presenting reminder interval setting content in the break reminder setting window if a current moment is within a first preset time period; or
presenting sleep reminder setting content in the break reminder setting window if the current moment is within a second preset time period.

According to at least one embodiment of the present disclosure, in Example 8, according to the method in any one of Examples 1 to 3,
a plurality of time controls are presented in the break reminder setting window, and the target reminder setting option is a time control selected by the user; or
a time slider is presented in the break reminder setting window, the time slider is provided with a handle and a plurality of time options, and the target reminder setting option is a time option selected by the user using the handle.

According to at least one embodiment of the present disclosure, Example 9 provides an interaction apparatus, including:
a setting window display module configured to display a multimedia player interface, and display a break reminder setting window on the multimedia player interface, where the break reminder setting window displays reminder setting options; and
a first window closing module configured to obtain, in response to a setting confirmation in the break reminder setting window, a reminder triggering condition corresponding to a target reminder setting option selected in the break reminder setting window, and close the break reminder setting window.

According to at least one embodiment of the present disclosure, Example 10 provides an electronic device, including:
at least one processor; and
a memory configured to store at least one program.

The at least one program, when executed by the at least one processor, causes the at least one processor to implement the interaction method described in any one of Examples 1 to 8.

According to at least one embodiment of the present disclosure, Example 11 provides a computer-readable storage medium having a computer program stored thereon. The program, when executed by a processor, causes the interaction method described in any one of Examples 1 to 8 to be implemented.

According to at least one embodiment of the present disclosure, Example 12 provides a computer program product. The computer program product, when executed by a computer, causes the computer to implement the interaction method described in any one of Examples 1 to 8.

In addition, although the various operations are depicted in a specific order, it should be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

## Claims

1. An interaction method, comprising:
presenting a multimedia player interface, and presenting a break reminder setting window on the multimedia player interface, wherein the break reminder setting window displays reminder setting options; and
obtaining, in response to a setting confirmation in the break reminder setting window, a reminder triggering condition corresponding to a target reminder setting option selected in the break reminder setting window, and closing the break reminder setting window.

2. The method according to claim 1, wherein the presenting a break reminder setting window on the multimedia player interface comprises:
presenting the break reminder setting window in a preset presenting region of the multimedia player interface in response to the user having set no reminder triggering condition and a target running duration of a client reaching a target running duration threshold.

3. The method according to claim 2, wherein the presenting the break reminder setting window in a preset presenting region of the multimedia player interface in response to the user having set no reminder triggering condition and a target running duration of a client reaching a target running duration threshold comprises:
presenting a break reminder window on the multimedia player interface in response to the user having set no reminder triggering condition and the target running duration of the client reaching the target running duration threshold; and
presenting the break reminder setting window in the preset presenting region of the multimedia player interface in response to receiving a first reminder setting operation performed in the break reminder window.

4. The method according to any one of claims 1 to 3, further comprising:
closing the break reminder setting window in response to receiving, within a preset time length, no trigger operation performed in the break reminder setting window.

5. The method according to any one of claims 1 to 3, further comprising:
presenting a running information display window on the multimedia player interface in response to a number of days, in a preset number of past days, in which a daily cumulative running duration of the client exceeds a preset cumulative running duration threshold reaching a set day number threshold, wherein the running information display window displays the daily cumulative running duration of the client in the preset number of past days.

6. The method according to claim 5, wherein the presenting a break reminder setting window on the multimedia player interface comprises:
presenting the break reminder setting window in the preset presenting region of the multimedia player interface in response to receiving a second reminder setting operation performed in the running information display window.

7. The method according to any one of claims 1 to 3, wherein the presenting a break reminder setting window on the multimedia player interface comprises:
presenting reminder interval setting content in the break reminder setting window in response to a current moment being within a first preset time period; or
presenting sleep reminder setting content in the break reminder setting window in response to the current moment being within a second preset time period.

8. The method according to any one of claims 1 to 3, wherein
a plurality of time controls are presented in the break reminder setting window, and the target reminder setting option is a time control selected by the user; or
a time slider is presented in the break reminder setting window, the time slider is provided with a handle and a plurality of time options, and the target reminder setting option is a time option selected by the user using the handle.

9. An interaction apparatus, comprising:
a setting window display module configured to display a multimedia player interface, and display a break reminder setting window on the multimedia player interface, wherein the break reminder setting window displays reminder setting options; and
a first window closing module configured to obtain, in response to a setting confirmation in the break reminder setting window, a reminder triggering condition corresponding to a target reminder setting option selected in the break reminder setting window, and close the break reminder setting window.

10. An electronic device, comprising:
at least one processor; and
a memory configured to store at least one program, wherein
the at least one program, when executed by the at least one processor, causes the at least one processor to implement the interaction method according to any one of claims 1 to 8.

11. A computer-readable storage medium having a computer program stored thereon, wherein the computer program, when executed by a processor, causes the interaction method according to any one of claims 1 to 8 to be implemented.

12. A computer program product, wherein the computer program product, when executed by a computer, causes the computer to implement the interaction method according to any one of claims 1 to 8.
